# EUROPEAN PATENT SPECIFICATION

(11) **EP 1 824 913 B1**
(45) Date of publication and mention of the grant of the patent: **11.02.2009**
(21) Application number: 05816191.0
(22) Date of filing: 28.09.2005
(51) Int. Cl.: C08J 7/04, C08J 7/12, A41D 19/00

(54) **IMMOBILIZING ANTI-MICROBIAL COMPOUNDS ON ELASTOMERIC ARTICLES**
IMMOBILISIERENDE ANTIMIKROBIELLE VERBINDUNGEN AUF ELASTOMEREN ARTIKELN
IMMOBILISATION DE COMPOSES ANTI-MICROBIENS SUR DES ARTICLES ELASTOMERES

(30) Priority: 16.12.2004 US 14323
(43) Date of publication of application: 29.08.2007
(73) Proprietor: KIMBERLY-CLARK WORLDWIDE, INC., Neenah, WI 54956 (US)
(72) Inventor: BAGWELL, Alison, S., Cumming, GA 30040 (US); KISTER, Mary, E., Cumming, GA 30040 (US); JANSSEN, Robert, A., Alpharetta, GA 30022 (US)
(74) Representative: Beacham, Annabel Rose
(86) International application number: PCT/US2005/034904
(87) International publication number: WO 2006/065318

(56) References cited:
- EP-A- 1 360 940
- US-A- 6 120 587
- US-A1- 2004 151 919

## Description

### FIELD OF THE INVENTION

The present invention pertains to elastomeric articles and methods for modifying the surface chemistry of such articles. In particular, the invention discloses certain chemical treatments that can be applied to an elastomeric substrate to achieve a more secure surface adherence and desired spatial orientation of the molecules of anti-microbial or antiviral agents.

### BACKGROUND

A variety of elastomeric articles traditionally have been produced from natural and synthetic-material polymers, such as polyisoprene, nitrile rubber, vinyl (polyvinylchloride), polychloroprene or polyurethane materials, partially because of the good moldability, processability, and physical properties upon curing of these materials. Elastomeric articles can be adapted for various kinds of applications, such as in clinical, laboratory, or medical settings, or manufacturing and other industrial uses. The ability of an elastomeric article to deform and recover substantially its original shape when released, after being stretched several times their original length, is an advantage. In addition to having high elasticity, nature rubber and synthetic lattices also provide good strength and good barrier properties, which are attractive and important features. Good barrier properties, which can be made impermeable not only to aqueous solutions, but also many solvents and oils, can provide an effective protection between a wearer and the environment, successfully protecting both from cross-contamination.

As the demand for good barrier-control has increased and expanded in many areas of daily life, the use of articles made from elastomeric materials has likewise increased and expanded. For instance, in the area of medical or surgical products, including surgical, examination or work gloves, prophylactics, condoms, catheters, balloons, tubing or other devices, which may be used in biological, chemical, or pharmaceutical research, and laboratory, clinical, or diagnostic settings, maintaining good barrier protection has been important. Guidelines issued by the Centers for Disease Control (CDC) encourage the use of universal safety measures at all times when handing either biological or chemical specimens, or when in contact with patients has made examination or work latex gloves articles of standard practice, since they have contributed positively to reducing contamination.

Nonetheless, elastomeric articles, such as gloves, present unique microbial problems, the control of which can be complex. To control microorganism contamination on elastomeric surfaces in the past, traditional practice has been to employ disinfectants and/or sanitizers, such as, ammonia, chlorine, or alcohol. These techniques tend to work in the short-term but often do not have prolonged protective efficacy to contain or stop transmission of microbes on surfaces.

Gloves have been developed to limit the transfer of microbes from the glove surface to environmental surfaces. Commonly, the mechanism by which this is accomplished is to employ so-called leaching anti-microbial compositions on the glove surface. By this approach, the concentration of anti-microbial compositions on the glove surface gradually decrease as bacteria ingest the anti-microbial compounds, which proceed to kill them. Overtime, as its concentration is leached away, the effectiveness of the anti-microbial agent is reduced on the glove. Moreover, in recent years, concerns about biological resistance and the development of so-called "superbug" strains have prompted persons in the medical and health communities to be weary of using gloves with leaching anti-microbial compositions. For example, the U.S. Federal Drug Administration (FDA) has restricted the use of leaching anti-microbial compounds on medical devices that come into contact with patients.

An alternative approach is to apply non-leaching anti-microbial compositions to the surfaces of gloves and other elastomeric articles. This approach, however, has had only limited success. Previously, when non-leaching compounds are applied to elastomeric or polymer substrates, little or no effect is observed in reducing the amount or concentration of microbes on the substrate surface. It is believed that either the physical or chemical nature of the substrate or the formulation of the biocide itself can have an important effect upon its efficacy. Hence, a great need exists for one to develop a system or technique that can stability immobilized non-leaching anti-microbial compositions to elastomeric substrate surfaces while retaining a consistent and efficacious anti-microbial performance.

US Patent Application Publication No. 2004/0151919 discloses elastomeric articles having reduced microbe affinity and transmission. The exterior surface of the articles includes art antimicrobial polymer formed from an organosilane quaternary ammonium compound.

### SUMMARY OF THE INVENTION

The present invention, in-part, details a method for modifying the surface chemistry of elastomeric materials so as to enable one to immobilize antimicrobial agents, or biocides on the surface of elastomeric articles with greater uniformity and consistency. A treatment adapts or imparts a bridging chemistry between the elastomeric surface and an antimicrobial compound. The treatment allows the antimicrobial agent to be stably associated with the substrate surface, such that the antimicrobial compound is durable and will not leach or be removed from the surface over the course of normal use. In particular, according to the present invention, the method includes the steps of: a) providing substrate having a surface with either polar or non-polar functionality, or imparting the surface with such functionalities; b) providing at least a layer of molecules, either as a film or coating over the substrate surface, or at least partially integrated with the substrate surface, the molecules having at least bi-functional polar character selected from hydroxyl, amine, amide, imine, imide, carbonyl, carboxyl, ester, aldehyde, or ether groups, in which at least one portion of the molecules has a reactive oxygen group exposed; and c) applying to the layer an antimicrobial agent having a functional group reactive with the exposed reactive oxygen group. The anti-microbial compound can have a R-group with a hydrocarbon chain of at least 6 carbon units as an active biocide anti-microbial moiety. The method may further provide an intermediate tying layer between the substrate and the antimicrobial compound. The polar or non-polar functionality may include a substrate surface oxygen group. The antimicrobial agent binds with the reactive oxygen group and is secured to the substrate surface in a predetermined or desired orientation. The antimicrobial agent should be oriented with the effective microbial-killing sites of the antimicrobial molecules projecting outwardly from the treated surface of the elastomeric substrate.

The invention also pertains to an elastomeric article, such as either work, surgical or examination gloves, or condoms, that has a surface modified according to the foregoing, and with an antimicrobial film or coating. The article comprises: a substrate with polar or nonpolar functionalities, upon which is at least a coating of molecules; said molecules having at least bi-functional polar character selected from hydroxyl, amine, amides, imine, imide, carbonyl, carboxyl, ester, aldehyde, or ether groups, in which at least one portion of the molecules has an oxygen group exposed; and, an anti-microbial compound having a functional group reactive with said oxygen group in the coating. The elastomeric article may be any kind of product formed by means of a dip-manufacturing technique:

The invention also pertains to a technique or method for creating a predetermined, desired spatial orientation of antimicrobial molecules on the surface of elastomeric articles. According to the invention, it is desirable to have the biocide functional groups of an attached antimicrobial molecule oriented outwardly from a treated surface of the substrate. Preferably, the antimicrobial molecules are uniformly oriented in one direction. A mechanism of protection, it its envisioned, is to prevent the adherence to or establishment of microbes on the treated substrate surface. Without a viable population of microbes on the gloves surface, the risk of contact-transmission, or cross contamination can be greatly reduced.

Additional features and advantages of the present method and resultant treated articles will be disclosed in the following detailed description. It is understood that both the foregoing summary and the following detailed description and examples are merely representative of the invention, and are intended to provide an overview for understanding the invention as claimed.

### BRIEF DESCRIPTION OF FIGURES

FIG. 1 depicts an elastomeric article, such as a glove 10, that has a surface 12 treated, according to the present invention, to create a reactive layer 14 for immobilizing antimicrobial agents 16 on the surface.
FIGs. 2A and 2B are chemical structures of a non-leaching antimicrobial molecule, such as octadecyl-amino-dimethyl-trihydroxy-silyl-propyl ammonium chloride, which may be attached according to a embodiment of the invention. Fig. 2B shows the molecule after it has been hydrolyzed.
FIGs. 3A and 3B show the hydration of the antimicrobial molecule of Fig. 2.
FIGs. 4A, 4B, and 4C is a series of schematic representations showing a mechanism for chemically tying or immobilizing the anti-microbial agent onto the surface of an elastomeric article, in which water is released in the formation of R-O-Si bonds.
FIG. 5 is schematic representation of a cross section of an elastomeric substrate 11 having a cross-linked network 15 of antimicrobial agents 16 on its surface, according to the invention.
FIG. 6 shows the interaction of a substrate 12 having antimicrobial molecules with their active biocide groups 22 arrayed in the cross-linked network 15, oriented outwardly against a bacterial cell 20.
FIG. 7 is a schematic representation of the surface charge disruption that certain types of antimicrobial agents have on bacterial cell membranes.

### DETAILED DESCRIPTION OF THE INVENTION

### Section I - Definitions

In this specification and the appended claims, the singular forms "a," "an," and "the" include plural reference unless the context clearly dictates otherwise. Unless defined otherwise, all technical and scientific terms used herein have the same meaning as commonly understood or generally accepted by one of ordinary skill in the art to which this invention pertains.

As used herein, "antimicrobial" refers to the property of a compound, product, composition or article that enables it to prevent or reduce the growth, spread, propagation, or other life activity of a microbe or microbial culture.

As used herein, "antimicrobial polymer layer" reters to a coating, film or treatment formed using an antimicrobial composition or agent, as defined and described herein.

As used herein, "microbe" or "microorganism" refers to any organism or combination of organisms likely to cause infection or pathogenesis, for instance, bacteria, viruses, protozoa, yeasts, fungi, or molds.

As used herein, "non-leaching" refers to the property of a material that renders it unlikely to or incapable of spontaneously migrating, flaking, fragmenting, or being removed or stripped from the surface to which the material is applied.

### Section II - Description

Anti-microbial agents or biocides, i.e., substances that prevent microbial growth either by killing or inhibiting the reproduction of microorganisms, are now being used on plastic applications beyond their traditional role of preventing bio-deterioration. Today, in the fields of medical treatment, diagnostics, inspection, sanitation, and food technology, a variety of microbicidal disinfectants are used for the prevention of contamination by bacterial and fungi of various kinds. Biocides generally can be classified into four main groups. Oxidizing anti-microbial compounds, such as halogens, halogen-containing polymers, halogen peroxide, chlorine dioxide, and ozone, make up the first group. These compounds are relatively quick acting, effective on a broad spectrum of microbes, and usually are not persistent in the environment. The oxidizing action either kills the bacteria or fungi outright, or weakens the cell walls so that these organism are more susceptible to the other classes of biocides. A second group includes toxic organic compounds, such as thiazoles, thiocyanates, isothiazolins, cyanobutane, dithiocarbamate, thione, triclosan, and bromo-compounds. Organic biocides exhibit a wide range of activity and persistence, but risks accumulation of toxicity over time. Likewise, the third group of metal or metallic biocides are usually slow acting, persistent, and toxic. The final fourth category includes surfactants, such as alkysulfosuccinates and quaternary ammonium compounds (QACs), which have the ability to disrupt cell membranes. These compounds are slow acting, effective on not a too-broad spectrum, and persistent, hence they can have extended efficacy.

Application of conventional anti-microbial agents on elastomeric products can suffer from unintentional side-effects. For most kinds of anti-microbial compounds to function effectively, typically, they must leach off of the coated product in the presence of water and become ingested by microorganisms. Normally, this eventually kills the microorganism, but sometimes also may lead to the development of chemical resistance or immunity in bacteria and the evolution of so-called "superbugs." Further, the overall amount of anti-microbial agent present on the substrate must initially be at a high concentration, since through leaching the concentration eventually decreases with use. To prevent the development of adaptive microorganisms and depletion of anti-microbial protection, the present invention proposes to coat elastomeric articles with anti-microbial agents that rupture the cell membranes, thus killing the microorganism. According to the invention, these kinds of agents should not leach-off, but should have indefinite durability on the coated surfaces, thus they need to be well bonded to the coated surface.

### A.

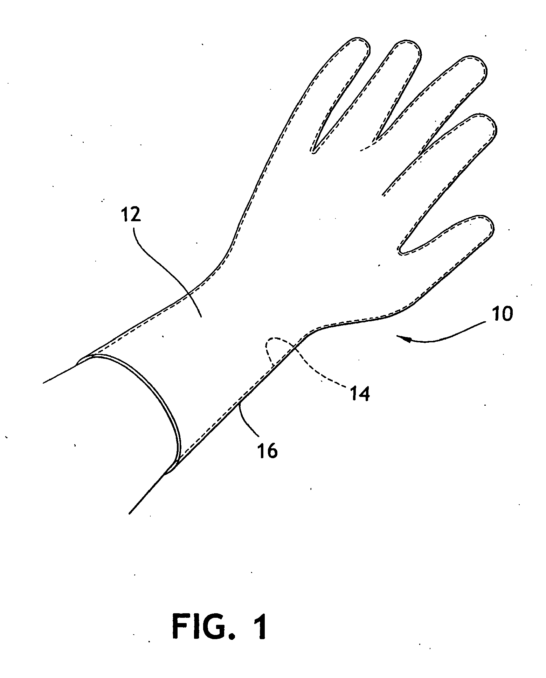

The present invention addresses, in part, an immobilization mechanism for creating a surface that is adapted for the attachment of non-leaching anti-microbial agents on the surface of an elastomeric substrate, such as a glove 10, as shown in Figure 1. Refinement of certain surface chemistry characteristics can overcome the problems and disadvantages associated with previous attachment chemistries, and permits the present invention to control the attachment and spatial orientation of anti-microbial molecules on elastomeric substrates. The surface chemistry should enable one to generate an article with antimicrobial agents that are stably associated with the substrate surface. In part, the present technique involves generating a surface with "surface oxygen" groups, by which is meant that the material contains, at its surface, oxygen which is integrated within or covalently bond to the material substrate. Such oxygen is capable of being covalently bonded to antimicrobial agents which contain a reactive silicon, such as found in organosilanes or siloxanes molecules. More specifically, the surface oxygen is considered within the scope of the invention if the oxygen reacts with any organosilane to form O-Si-R bonds. When used in water, organosilane molecules typically hydrolyze to form R-Si-OH. These terminal hydroxyl groups also readily bond with other chemical groups that may be present on the substrate surface.

According to the present invention, certain antimicrobial molecules becomes significantly more likely to stably adsorb and bind to the substrate surface, and exhibit improved effectiveness against microbes when the surface of an elastomeric or polymeric substrate is pretreated to create a uniform coating on the surface with exposed reactive oxygen groups, such as hydroxyl function groups. The term "uniform coating" refers to the either the creation, application or presence of a consistent and controllable density of reactive oxygen groups (e.g., hydroxyl groups) covering an exposed substrate surface. This feature, in turn, contributes to a more secure and even coating of antimicrobial agents over the substrate surface. The density of the uniform coating should be sufficient to enable stable attachment of a sufficient quantity of antimicrobial molecules to the elastomeric substrate surface to prevent microbes from establishing a culture. The density of reactive oxygen groups on the surface can be about 1-3 groups per square nanometer (nm²), desirably about 5-15 groups/nm². Typically, the density is at least about 100 or 150-500 per square micrometer (µm²) or greater, such as about at least 1,000 or 2,500 groups/µm² up to about 10,000 or 12,000 groups/µm². Further, the presence of reactive oxygen groups in sufficient density enables one to orient selected anti-microbial molecules in a predetermined fashion, wherein the biocide active moieties of these molecules are directed outward, away from the substrate surface. This ensures that the antimicrobial agents function with consistent efficacy.

After the uniform coating is generated on a bare surface of the elastomeric substrate, a film or layer of a non-leaching antimicrobial polymer can be applied. The antimicrobial molecules are durably bonded to the exterior surface of the article, such as described in U.S. Patent Application Ser. No. 10/355,579. To apply the antimicrobial agents, one may select to employ techniques, such as, that involve either dipping into a bath or spraying a fine mist which deposits a thin molecule layer on the pretreated elastomeric surface.

It is believed that the present invention overcomes the problems and disadvantages associated with previous attachment techniques by forming linkages between polar moieties, desirably hydroxyl groups, on a prepared substrate surface. These polar moieties bind with selected functional groups of anti-microbial compounds, hence securing the molecules of the anti-microbial compounds to the surface in a predetermined orientation. Another advantage of the present treatment is that the surface modification need not comprise combinations of materials that are either a dermal irritant or highly toxic to mammals.

The anti-microbial composition generally includes any one of a silane ammonium quaternary compound, a biguanide, an alkylsulfosuccinate, an organosilane, or combinations thereof. The anti-microbial agents or compounds that may be employed with the present invention typically have biocide sites made up of a relatively long hydrocarbon chain of at least about five or six carbons in length. The hydrocarbon chain can have a length of up to about 35 to 40 carbons.

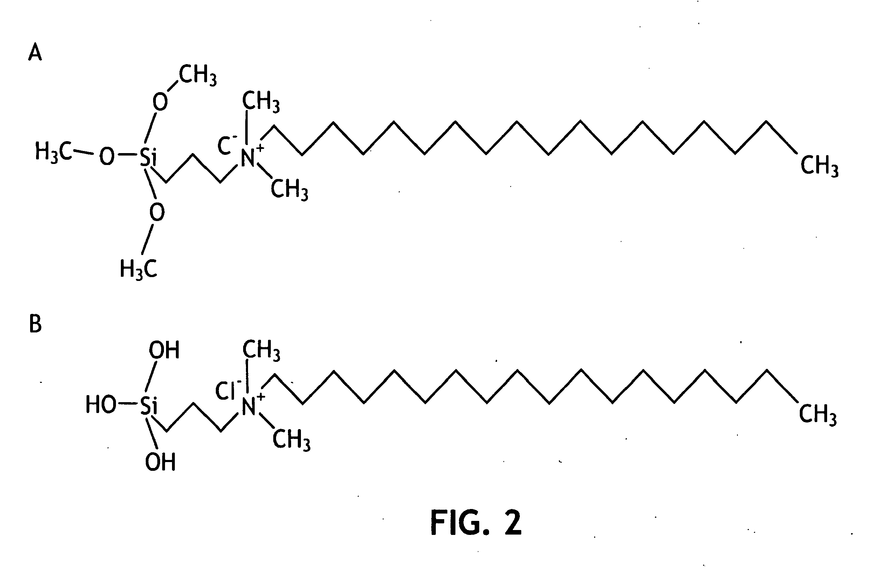

An example of a suitable composition that is effective when externally bound to a glove is an organosilane product called Microshield^{™}, commercially available from Aegis Environments of Midland, Michigan. The Microshield^{™} product line includes various combinations of 3-(trimethylsilyl) propyldimethyloctadecyl ammonium chloride in methanol. For example, an antimicrobial exam glove for the medical market can be created by topically treating latex and nitrile gloves with the AEGIS AEM 5700^{®} antimicrobial. AEM 5700 is a mixture of methanol, chloro-propyl-trimethoxy-silane and octadecyl-amino-dimethyl-trihydroxy-silyl-propyl ammonium chloride. The octadecylaminodimethyltrihydroxysilylpropyl ammonium chlorine, as shown in Figures 2A and 2B and below, is the active component in the biocide.

Antimicrobial agents, such as octadecyl-amino-dimethyl-trihydroxy-silyl-propyl ammonium chloride, have a silicon molecule at their centers. The chemical structure of octadecylaminodimethyltrihydroxysilylpropyl ammonium chloride illustrated, 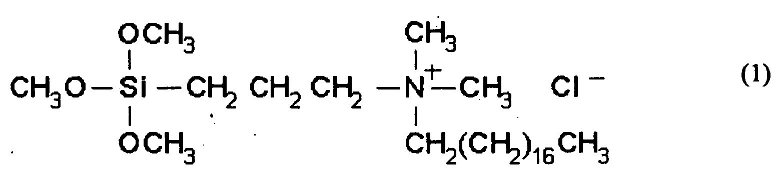 Octadecyl-amino-dimethyl-trihydroxy-silyl-propyl ammonium chloride is comprised of two functional groups, a methoxy head group and a quaternary amine with a long aliphatic tail (e.g., C₁₈). The methoxy group on the siloxane is used to anchor and cross-link the antimicrobial agent to various substrates. The quaternary amine, with the long aliphatic tail, or "sword," enables the molecule to function as the biocide.

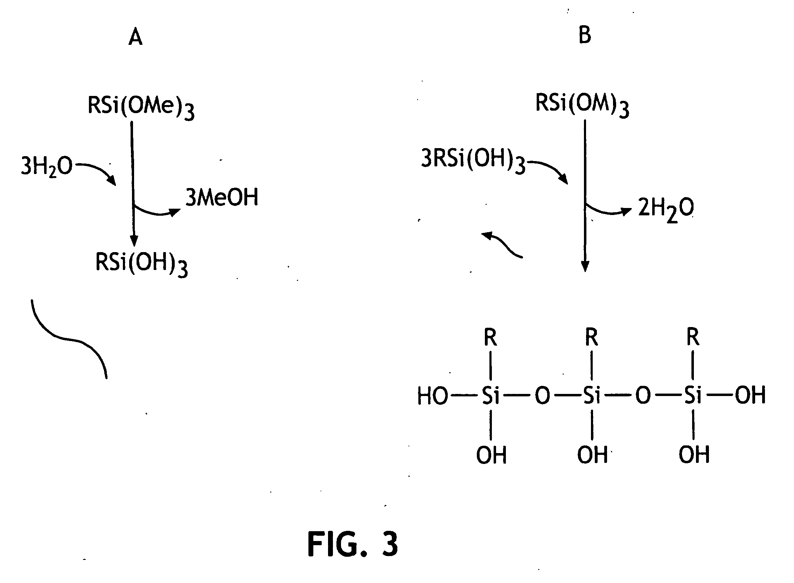

As shown in Figures 2A and 2B, when the antimicrobial agent is hydrolyzed, the silicone molecule can react and bond with active oxygen molecules on a substrate. Figures 3A and 3B illustrate a series of reactions for the hydrolysis of the antimicrobial molecule, which converts the methoxide groups to hydroxide groups in aqueous media. When hydrolyzed, 3-(trimethoxysilyl) propyldimothyloctadecyl ammonium chloride produces a silanol form of octadecyl-amino-dimethyl-trihydroxy-silyl-propyl ammonium chloride, with three silanol bonds on each molecule, such that the compound exists as silane triols. One silanol group bonds to the substrate. The silanol groups can react with hydroxyl, amine, or other functional groups present in the substrate surface, or may attach to the surface via short range Van der Waals or hydrogen bonding forces, or ionic bonding forces. These close, short range forces can be extremely strong and provide a secure anchoring for the anti-microbial molecules. Alternatively, the other two bonds react covalently with other, neighboring silanol group (i.e., self-crosslink) to form a micropolymer network of Si-O-Si bonds. When the antimicrobial molecules are both bound to the surface as well as to each other, the molecules form a stablely associated micropolymer network or matrix on the substrate surface. Additional layers of antimicrobial molecules can be crosslinked into the existing organosilane network on the surface; to create a thicker or denser antimicrobial coating. The micropolymer network can lock securely into micro-fissures, cracks, and other surface topography of the substrate, which creates a uniform, consistent, and even anti-microbial coating layer over any irregular surface features.

For example, as illustration, in aqueous media, Methoxy groups are hydrolyzed, such that the antimicrobial compound exists as silane triols. Immediately after hydrolysis, the compound is primarily -83% monomeric form. After aging, the compound becomes about 34% mono, 23% dimer, 30% trimer and 13% tetramer. (At a pH = 9, the mean half-life is about 3.79 minutes; at pH = 7, the mean half-life is about 7.98 minutes; at pH = 5, the mean half-life is about 14.59 minutes, all at a temperature of about 25°C, in 0.01 M Buffer of Na₂HPO₄/NaH₂PO₄; with AEM 5772 20ml/liter = 2% V/V.) (At a pH = 9, Mean Half Life of about 3.79 minutes, it takes about 18.9 minutes for 96.875% of the molecules to become hydrolyzed; at pH = 7, Mean Half Life of about 7.98 minutes, it takes about 39.9 minutes for 96.875% to become hydrolyzed; at pH = 5, Mean Half Life of about 14.59 minutes, it takes about 72.9 minutes for 96.875 % to become hydrolyzed.) The monomeric form is desired for treating fibers, textiles & substrates. Steric hindrance of oligomers hinders reactivity. With no pH adjustment, hydrolysis of AEM 5700 at 2% V/V takes about 75 minutes for ≥97% completion.

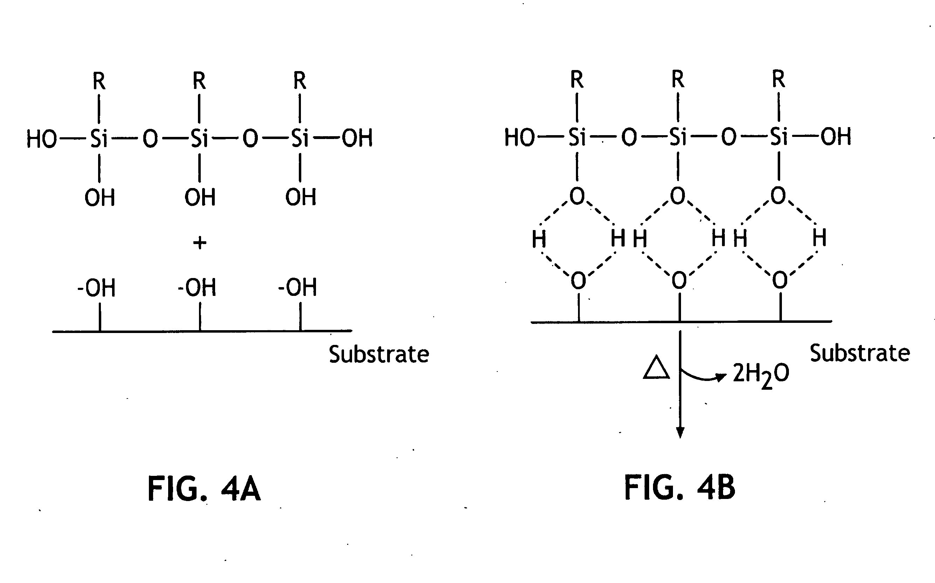

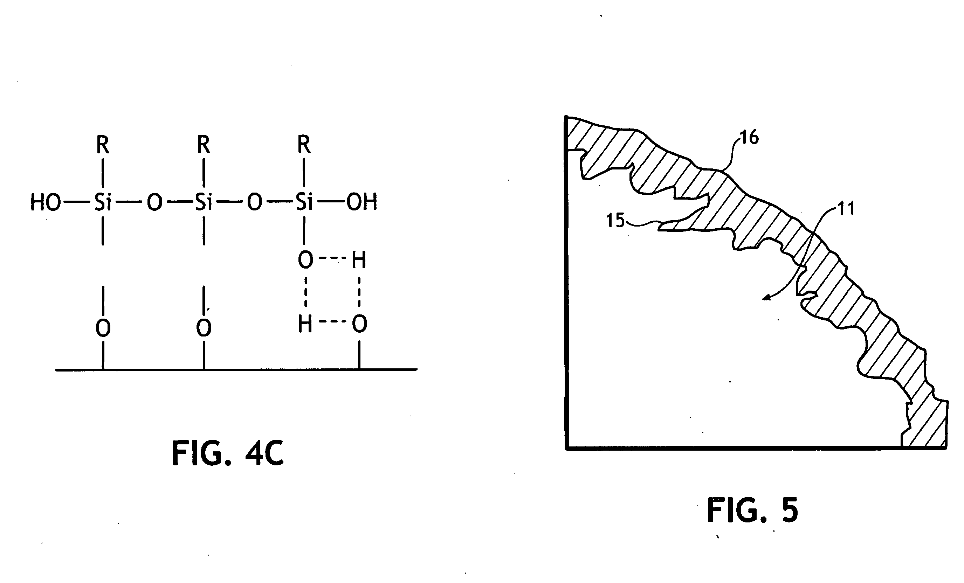

An elastomeric substrate pretreated with a chemical agent, such as an alcohol, for instance, can provide active oxygen groups, such as hydroxyl groups, on the substrate surface. As Figures 4A and 4B schematically show, the hydroxide groups of the antimicrobial molecule can react and bind with the surface oxygen groups on the substrate surface. Water is released in the process, such as show in Figure 4C. Once bonded, the active component in the biocide, which for example in octadecyl-amino-dimethyl-trihydroxy-silyl-propyl ammonium chloride has a long aliphatic chain with the N⁺ ion, which can affect the cellular surface charges of microbes.

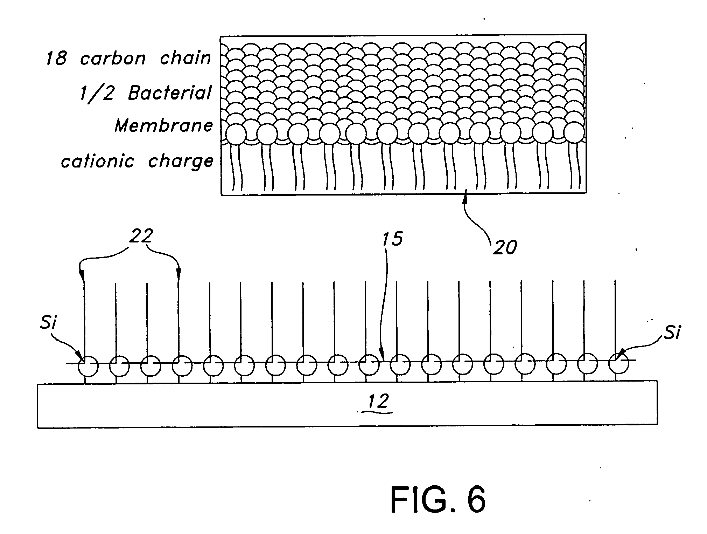

Preferably, the active biocide sites of a selected antimicrobial molecule, such as the long aliphatic tail or so-called "sword" portions of quaternary amines, is directed outward, away from the substrate surface, to be more effective against microbes which may contact the substrate. With such an orientation, the microbes find a more difficult or hostile condition to establish themselves on the surface. When immobilized, such as depicted in Figure 6, the individual antimicrobial molecules on the substrate form a cross-linked network of antimicrobial molecules. Generally, the treatment creates at least a first monolayer that bonds to the substrate using short range forces or covalent bonding. An extended micropolymer network is formed between neighboring molecules having Si-O-Si bonds. During drying & curing, a covalent linkage is formed with the substrate with a concomitant loss of water. At the interface there is usually only one bond with each silicon of the organosilane with the substrate surface. The remaining two silanol groups are bonded to other molecules of organosilane. Additional organosilane molecules may be applied to the substrate surface for a more secure linkage. Optionally, additional layers of antimicrobial may be desirably cross-linked with the existing antimicrobial molecules, since a minimum of only a single layer is required for an operative antimicrobial effect.

The cross-linked antimicrobial molecules each have biocide reactive groups pointed outwardly from the substrate, like a porcupine presenting a wall of quills, against any potential microbe, such as a bacterium. If an microbe contacts the antimicrobial treated substrate surface, the microbe will not long survive. Antimicrobial agents typically work by disrupting several different mechanisms, such as genetics, enzymes, energetics, and membrane transport. According to an embodiment, a non-leaching antimicrobial agent physically or chemically disrupts of the charge on the bacterial cellular membrane, which results in a loss of the capacity for active transport and proton motive force, and kills the bacteria. The disruption destroys the cell's ability to control functions such as the import of nutrients and export of wastes.

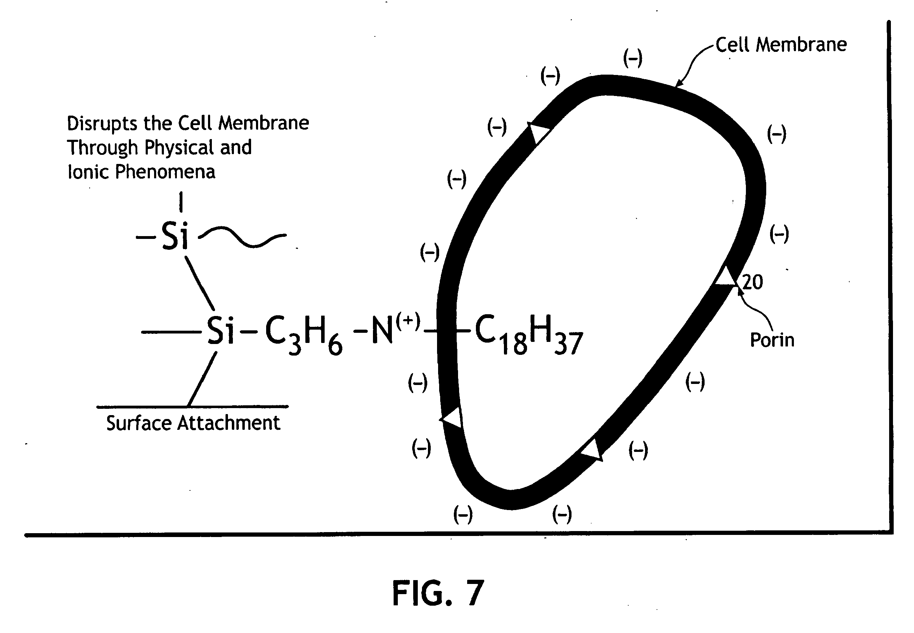

As illustrated schematically in Figure 7, the aliphatic tail of the molecule can disrupt, by means of physical and/or charge interference, the cellular membranes of bacteria. For instance, the long carbon chains of the antimicrobial agent can be inserted into the cell membrane, and the nitrogen can disrupt cell surface charges. Once the function or integrity of the bacterial cell is compromised, the bacteria soon dies.

For purposes of illustration, the present invention will be discussed in the context of molded gloves, condoms, and other like articles. This, however, in no way limits the use or possible applicability of the surface treatments or characteristics of the present invention to other kinds of elastomeric articles or products, or their natural extensions. Nor is the present invention limited to any particular kind of substrate. Rather, it may be applied to all types of elastomeric or polymeric materials, which may require antimicrobial protection. For instance, the present invention can be employed during the fabrication process of either emulsion or solution-based products, such as natural rubber latex, nitrile, vinyl, or synthetics polymers (e.g., styrene-ethylene-butylene-styrene (SEBS), or styrene-butadiene-styrene (SBS) copolymer materials). It is envisioned that the present inventive method may be applied to prepare any elastomeric article made according to a latex-bath dip-forming technique.

The surface of gloves, such as those used in research laboratories or medical and surgical environments, may be modified using the present pretreatment to better adhere antimicrobial agents. According to one version of the present invention, a layer of hydroxyl groups is formed on the surface of an elastomeric rubber substrate. To this hydroxyl layer one coats a non-leaching anti-microbial agent or compound, such as quaternary ammonium compounds (QAC) alkylsulfosuccinates, or biguanides. The mode of action of this technology is believed to be associated with adherence of the microbes to the glove by a charged mechanism. Microbes generally have an overall negative ionic charge, which will attract them to the positive charge of the QAC attached to the glove surface. Microbes are trapped by the QAC and retained on the glove to another surface, hence minimizing their transfer or contamination of other surfaces. The active functional or biocidal groups of the antimicrobial molecules disrupt the microbes cell membrane killing the microbe.

It is envisioned that the invention can have at least two general types of possible embodiments. According to the first embodiment, an intermediate tying layer, or interlayer, is applied to a bare elastomeric surface before coating with an anti-microbial agent. The intermediate layer is comprised of the following formula: 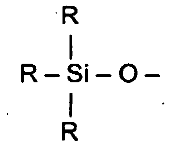 The anti-microbial agent can be covalently bonded to the surface through the application. The polymer intermediate layer, desirably, is hydrophilic. The antimicrobial agents are preferably of a polar nature. This enables them to associate with the polar groups of the interlayer, for example by hydrogen bonding or van der Waal force interactions.

In the second embodiment, the elastomeric substrate surface itself may be modified. Components of the tying layer are admixed into a latex formulation prior to the latex is applied to a mold or form. This technique integrates a mechanical network at or near the surface of the elastomeric substrate in which hydroxyl functional groups are exposed for binding with the molecules of the anti-microbial agent. According to the second embodiment, there is an additional mechanical capture of the anti-microbial molecules to the surface.

Figures 5 and 6 show schematic representations, on different scales, a cross-linked network of the antimicrobial adhered to the surface of an appropriate elastomeric substrate. A network of short length hydrogen bonds at the surface holds the antimicrobial agent to the prepared substrate. This micropolymer network has several virtues. These include being resistant to all organic solvents and strong acids or bases, does not leach off of the coated substrate in water or salt solutions, and are thermally stable up to about 257°C.

In certain desired embodiments, it is envisioned that the bond between the substrate latex layer and the polymer coating can be one of either two types. First, when the wet glove has the aqueous polymer coating applied, the polar functional groups of the polymer molecule will penetrate slightly into the latex surface. This will produce a mechanical entrapment of the polymer on the latex surface when the latex is dried and cured. This is referred to as an "interpenetrating polymer network" (IPN). The second type of bond preferably is ionic in nature due to the polar groups present in both the latex materials and the polymer coating. When the coating is dried onto the latex substrate, the bonds will be further enhanced due to the closer proximity of the polar groups. This is referred to as a secondary chemical bond.

The bond between the polymer coating and the anti-microbial agent can be a primary chemical bond. Preferably, it will be an ether linkage. Both these types of bonds will have sufficient "strength" and durability to hold up in the environments to which it will be exposed to. The IPN will entrap the polymer coating to the latex surface along with further stability attributed to the ionic attraction of the polar groups. The ether bond will hold the antimicrobial molecule to this polymer coating.

Given that an elastomeric material will have the ability to stretch and expand its surface, the immobilization mechanism should be able to maintain the anti-microbial coating on the coated surface without the coating coming off of the coated surface. Concerning the stretching of the glove, if the above polymer coating is selected from an elastomeric material, the coating will stretch with the glove. If it does not undergo the same elongation as the glove, it will fracture. The fractured coating (with the attached antimicrobial agent), however, will still stay bonded to the glove. It will not flake off because it will stay bonded due to the above described mechanisms. This is not to exclude, however, the possibility that if one applies an excess amount of anti-microbial compounds that the material would not slough off in part. Observations suggest that in a range of about 0.030mg/g to about 0.47 mg/g no sloughing occurs; but, at levels more than about 0.05mg/g there may be too much anti-microbial compound on the glove and an insufficient amount of surface area or functional groups to bond the anti-microbial to the glove. Thus, it can slough at that level and beyond.

The antimicrobial compositions can easily be incorporated into a natural or synthetic latex matrix, such that the functional portion extends from the elastomeric substrate or polymer matrices. When incorporated into such materials, the surface becomes modified so as to substantially prevent the growth of microorganisms on the treated substrate surface. The treatment permits one to form consistently a uniform coating of an even thickness over the entire surface of the elastomeric substrate. In terms of gloves of other articles which may be subject to frictional or surface contact, the anti-microbial agents coated on the stressed regions of the glove are maintained without leaching or rubbing off.

Unlike leaching anti-microbial agents, which wear away over time, the outer surface of a substrate treated with as little as a single layer of the present non-leaching agents will be sufficient and effective at inhibiting microorganism growth or killing them. In other words, the anti-microbial agent controls microbial growth and is not-depleted, thus one layer of will inhibit growth as well as multiple (e.g., 50) layers, although the invention is not limited to only a coating of a single layer. Whereas other anti-microbial agents have to be ingested by the microorganisms, mechanism by which the present agents achieve microbial growth inhibition is by means of contact with the surface of the outer-most layer of molecules. The anti-microbial agent disrupts the charge properties of the microbe cell membrane and lyses cell membrane.

It is believed that other chemistries that have hydroxyl functional groups, which can tie the antimicrobial molecules to the material substrate, can also be effective. But more important factors are relative the orientation of the antimicrobial properly and the zeta potential on the surface of a glove, which will inform about the state of ionic charge on the surface - positive, negative or neutral.

### B.

Having described the broad concept of the present invention, we now turn to describing a method for immobilizing anti-microbial compounds onto elastomeric surfaces. In general, the method comprises: a) providing substrate having a surface with either polar or non-polar functionality; b) providing at least a layer of molecules, said molecules having at least bi-functional polar character selected from hydroxyl, amine, amide, imine, imide, carbonyl, carboxyl, ester, aldehyde, or ether groups, in which at least one portion of said molecules has a reactive oxygen or nitrogen group exposed, and applying to the layer an anti-microbial agent having a functional group reactive with the exposed oxygen groups. The substrate can be either a natural or synthetic latex, such as nitrile, or vinyl material. The layer of molecules can be a polymer that is adapted to be a covalent linker agent for immobilizing the anti-microbial agent to the elastomeric substrate surface. The layer of molecules orients said active anti-microbial moiety of said anti-microbial compound substantially away from said substrate surface. The layer of molecules includes at least one of the following: polyvinyl alcohol, carboxyl-methyl cellulose, hydroxy-propyl cellulose, poly(diallyl-dimethyl-ammonium chloride) (PDADMAC), or epihalohydrin-amine polymers. The layer of molecules can either a) form part of an intermediate tying coating between said substrate and said anti-microbial agent, or b) be integrated into said substrate surface. The anti-microbial compound is non-leaching, remaining substantially bonded to said substrate. The anti-microbial compound, preferably, has a R-group with a hydrocarbon chain of at least 6 carbon units as an active anti-microbial moiety, and may include compounds such as a quaternary ammonium compound, biguanide, or an alkylsulfosuccinate compound.

According to another aspect of the invention, the method can be used to produce an elastomeric article having a surface with an anti-microbial coating. The article has the characteristics of the method and comprises: a substrate with polar functionalities, upon which is at least a coating of molecules. The molecules have at least bi-functional polar character selected from hydroxyl, amine, amides, imine, imide, carbonyl, carboxyl, ester, aldehyde, or ether groups, in which at least one portion of the molecules has exposed reactive oxygen groups that can react and bind with an anti-microbial compound having a compatible reactive functional group. The article can have an outer substrate surface with a greater concentration of molecules demonstrating at least bi-functional polar characteristics than within the substrate. That is, the article has a differentiated concentration gradient of molecules having at least bi-functional polar characteristics from inside to outside of the substrate; or in other words, from an inner surface to an outer surface. The substrate forms part of an article formed according to a dip-forming process, such as used for the making of elastomeric polymer substrate, such as laboratory or clean-room work gloves, examination or surgical, gloves, condoms, catheters, balloons or part of other protective or medical devices.

According to certain embodiments, the present invention details a pretreatment composition which can facilitate the attachment of non-leaching anti-microbial agents to the surfaces of an elastomeric material substrate, in an even, uniform coating.

It is envisioned that any type of compound which can hydrolyze the surface of the substrate can be a good candidate for use in the pretreatment. The pretreatment additives, according to an example, may include polyvinyl alcohol (PVA), poly(diallyl-dimethyl-ammonium chloride) (PDADMAC), epihalohydrin-amine polymers, carboxy methyl cellulose (CMC), and hydroxy propyl cellulose' (HPC). The pretreatment involves applying a medium or solution containing pretreatment additives by means of either spraying with or dip-coating the bare elastomeric surface. The surface treatment can be applied after curing and chlorination of the elastomeric membrane or film, but prior to applying any antimicrobial agents or compounds. The pretreatment polymer coating will probably be at least a monolayer and have a maximum thickness of about 3-15 micrometers (µm), desirably about 5 microns. When the polymer includes hydroxyl functional groups, the coating film will be hydrophilic. The hydroxyl groups on the tying polymer are polar and will therefore exhibit hydrophilic character. Table A shows an example of the composition.

| Table A: Anti-Microbial Formulation (weight % by volume) | | |
|---|---|---|
| Ingredient | Formula Ex. 1 | Formula Ex. 2 |
| QAC | 4.0% | 2% |
| Wetting agent | 0.01% | 0.01 % |
| Cetyl pyrridinium chloride | 0.1% | 0.1% |
| Anti-foamer | 0.002% | 0.002% |
| Deionized water | QS | QS |

In another embodiment, the invention relates to a method for providing an elastomeric article that can prevent transmission of microbes. The method includes either treating or providing an elastomeric article having a surface treated with a chemical agent, which can generate exposed reactive oxygen groups on the surface. To the treated surface, we apply in a stably associated fashion an antimicrobial agent having at least a functional group that is reactive with the exposed reactive oxygen groups. It is envisioned that instruction of how to used the elastomeric article will be provide to a final consumer or user.

The present invention also relates to an article, such as an elastomeric glove, having a mechanism for reducing microbe affinity and transmission. The article includes an exterior surface including an antimicrobial polymer, where the antimicrobial polymer is formed an organosilane quaternary ammonium compound. The antimicrobial polymer may be a water-insoluble siloxane resin, a siloxane homopolymer, or a combination thereof. The article may include about 0.05% to about 10% by mass antimicrobial polymer.

The present invention further contemplates a method of making an elastomeric glove having reduced microbe affinity and transmission. The method includes forming the glove with an exterior surface, contacting the surface with a composition including an antimicrobial silane quaternary ammonium compound, and drying the glove, such that the compound at least partially hydrolyzes to form a water-insoluble siloxane resin, and at least partially homopolymerizes to form a siloxane homopolymer on the exterior surface.

### C.

In the manufacture of latex articles, for instance such as gloves, a mold or former is first cleaned and coated with a coagulant to prime the mold surface and enable a solution of latex compound to cover the mold more uniformly and consistently. In certain embodiments, an amount of release powder may also be applied at this point to the mold surface. The mold is submerged in the latex compound, once to a number of times, to create a layer on the former. Various leaching steps follow and the latex is finally dried and cured.

A glove 10, such as shown in Figure 1, is formed on a hand-shaped mold, termed a "former." The former may be made from a variety of suitable materials, such as metal, glass, porcelain, or other like substrate surfaces to which a film can be applied. The surface of the former defines at least a portion of the surface of the glove to be manufactured. The glove has both an exterior surface and an interior surface. Generally, the surface in contact with the former surface becomes the exterior surface, and the interior surface comes in contact with the wearer.

In the manufacture process, the former is cleaned and dried when conveyed through a preheated oven to evaporate any water present. The former then may be dipped into a bath typically containing a coagulant, a release agent, a surfactant, and water. The coagulant may contain calcium ions (from e.g., calcium nitrate) that enable a polymer latex to deposit onto the former. The release agent helps ease the stripping of the glove from the former. A release agent can be either a powder, silicone, organosilane; or other like materials. The gloves also may or may not have the powder present, depending on whether the glove is to be powdered or powder-free. A powder source, such as calcium carbonate powder. The surfactant provides enhanced wetting properties to avoid the formation of a meniscus and/or trapping of air between the form and the deposited latex film, especially in the region of the cuff. Any suitable coagulant composition may be used, including those such as described in U.S. Patent No. 4,310,928 to Joung. After the drying process, residual heat radiating off of the formers evaporates the water in the coagulant solution and leaves, for example, calcium nitrate, calcium carbonate powder, and the surfactant on the surface of the former. Although a coagulant process is described herein for illustrative purposes, it should be understood that other processes that do not require the use of a coagulant may be employed to form the different types of articles encompasses by the present invention. For instance, in some embodiments, a solvent-based process or emulsion-based process may be used.

The coated former is then dipped into a polymer bath, which can contain either a natural rubber or a synthetic polymer latex. The polymer present includes an elastomeric material that coagulants into a film, which forms the body of the glove. When, according to some desired embodiments, the elastomeric material, or elastomer, may include nature rubber, which may be supplied as a compounded nature rubber latex, the bath may contain, for example, compounded nature rubber latex, stabilizers, antioxidants, curing activators, organic accelerators, vulcanizers, and the like. In other embodiments, the elastomeric material may be a synthetic latex, such as, nitrile butadiene rubber, in particular, carboxylated nitrile butadiene rubber. In further embodiments, the elastomeric material may be a styrene-ethylene-butylene-styrene block copolymer, styrene-isoprene-styrene block copolymer, styrene-butadiene-styrene block copolymer, styrene-isoprene block copolymer, styrene-butadiene block copolymer, synthetic isoprene, chloroprene, rubber, neoprene, polyvinyl chloride, silicone rubber, polyurethane, or a combination thereof.

### D. - EXAMPLES

Having described the general attributes of the present invention, the following examples illustrate the functional effectiveness of a substrate, like a glove, which is prepared and treated according to the present invention, against microbes, such as *Staphylococcus aureus*, or other bacteria.

### I.

To determine the relative number of organisms killed, we preformed a contact-transfer test on glove surfaces prepared according to the present invention and on a control glove substrate. A number of newly fabricated PFE gloves are prepared by spraying with polyvinyl alcohol (PVA) on the grip-side of the glove, and the glove is dried. An amount of about 2% anti-microbial compound (AEM) is applied to the glove surface and the gloved dried. Empirical Table A lists a series of data points that demonstrate the killing effectiveness, over an interval of 30 minutes, of an antimicrobial agent immobilized using the present pretreatment.

**Empirical Table A. Micro-organism Count (CFU/ml)**

| **Sample #** | **Zero Time Point** | **3 min. Time Point** | **5 min. Time Point** | **30 min. Time Point** |
|---|---|---|---|---|
| #1 - 1/2 KC SafeSkin PFE Latex Glove; 8855-88-5 0.40% PVA; 2% AEM 5700 | 1.3 X 10⁵ | 5.2 X 10⁴ | 1.2 X 10⁴ | 20 |
| | | | | |
| #2 -1/2 KC SafeSkin PFE Latex Glove; 8855-88-4 0.25% PVA; 2% AEM 5700 | 1.5 X 10⁵ | 8.0 X 10⁴ | 5.7 X 10⁴ | 90 |
| | | | | |
| #3-1/2KC SafeSkin PFE Latex Glove; 8855-70-2 0 days aged; extra rinses prior to AEM 5700 | 1.7 X 10⁵ | 1.6 X 10⁵ | 1.5 X 10⁵ | 1.5 X 10⁵ |
| | | | | |
| Control -1/2 KC SafeSkin PFE Latex Glove & S. aureus (6/16/03) | 1.6 X 10⁵ | 1.8 X 10⁵ | 1.4 X 10⁵ | 1.6 X 10⁵ |

### II.

In another example, we applied a sample of microbe organisms directly in contact with each glove surface. The microbes remained in contact with the substrate for a total of about six (6) minutes (one minute spreading and five minutes standing). According to a protocol, immediately prior to use, first prepare and sterilize with alcohol and ultraviolet (UV) radiation the tops of a number of 50-mL conical tubes. (Spray tubes with 70% ethanol and wipe with clean paper towel, then set under the UV light for 20 minutes.) Then, place a swatch of a glove surface on a conical tube, right-side up, and fasten with a rubber band. The glove surface is sterilized with UV for 20 minutes. About 50µL of 5x10⁸ CFU/mL of inoculum is added directly onto the glove surface. (The number of organisms in 50µL is about 2.5 x 10⁷ CFU.) The inoculum is spread with Teflon policemen for 1 minute, and the inoculated glove is let to sit for about five (5) minutes. The inoculated portion of the glove then is cut from the rest of the glove by cutting just above the rubber band. The inoculated glove portion is placed in 25 mL of Letheen broth in a 50-mL conical tube. The tube is kept on ice until all of the glove samples are likewise prepared. Each tube in an upright position is subject to a vortex for about two (2) minutes on high setting. The tubes are then subject to about ten (10) minutes at one-minute intervals of sonication with about one minute sitting in between, for a total of five (5) cycles. Then the tubes are returned to ice. Vortex each tube for 30 seconds immediately before plating on TSA (trypticase soy agar) plates. Dilutions of each tube should be made before plating. Recommended dilutions are 10⁻¹, 10⁻², and 10⁻³, so that the dilutions on the plates end up as 10⁻², 10⁻³, and 10⁻⁴ respectively. The plates are incubated at ∼ 37°C overnight and the bacterial colonies formed are counted.

As Empirical Tables 1-3 indicate, within three hours the surface of the elastomeric gloves have about a 97-99% reduction of microbial population. The best performing formulations reduced the microbe organism count by as much as about 68-71 % within the first half-hour, and as much as 82-95% within an hour. These examples generally are gloves that were treated with a relatively high concentration (∼0.30% or greater) of a chemical agent, such as polyvinyl alcohol, which created reactive oxygen groups on the surface, before application of the antimicrobial coating. Hence, the empirical test results suggest that the effectiveness of kill is greatly enhanced by the pretreatment to correctly orient the biocide active regions of the antimicrobials on the surface of the elastomeric substrates. Typically, the presence of a zone of bacterial inhibition indicates leaching, and the unsuitability of the specimen for non-leaching uses, but the present invention did not have any leaching.

### II.

In another example, we used an American Society for Testing and Materials (ASTM) standard test method (E 2149-01) designed to evaluate the resistance of non-leaching anti-microbial treated specimens to the growth of microbes under dynamic contact conditions. Involving a dynamic shake flask, this test method was developed to overcome difficulties associated with using classical antimicrobial test methods to evaluate substrate-bound antimicrobials. Since the biocidal activity of a substrate-bound antimicrobial agent is dependent upon direct contact of microbes with the active chemical agent, this test determines the antimicrobial activities by shaking samples of surface-bound materials in a concentrated bacterial suspension for a specified amount of contact time, usually about one hour. The suspension is serially diluted, both before and after contact, and cultured. The number of viable organisms in the suspension is determined and the percent reduction is calculated based on initial counts or on retrieval from untreated control samples.

### E. - Experimental

A glove may be analyzed according to a variety of analytical techniques to determine surface functionality. For example, ESCA or attenuated total reflectance (ATR) of the surface will show the presence of the different polar groups and the type of antimicrobial agent used. An antimicrobial agent, AEM 5700, is applied to both latex and nitrile gloves to confirm that it can adhere to common glove substrates and maintain effective antimicrobial properties. Transfer studies using treated gloves indicated that the antimicrobial coating worked effectively on the latex gloves but not the nitrile gloves. Samples were submitted for analysis to confirm that the antimicrobial is retained on the nitrile glove and determine if there are any conformational differences with the antimicrobial between the two substrates. Conformational differences could potentially cause ineffective antimicrobial behavior. For example, if the aliphatic tail was not available to interact with the microbes, it could not effectively disrupt the cell membrane of the microbes, making it ineffective. Table 1 provides a listing of the code for different glove samples.

**Table 1 - Glove Samples Submitted for Analysis**

| Sample No. | Description |
|---|---|
| 1 | PFN Treated with AEN - blotchy area |
| 1b | PFN Treated with AEN - uniform area |
| 2 | PFN Chlorinated |
| 3 | PFE Treated |
| 4 | PFE Chlorinated |
| 5 | PFE Non-chlorinated |
| 6 | PFN Non-chlorinated |

Surface analysis was performed by x-ray photoelectron spectroscopy (XPS) using a Fisons M-Probe spectrometer equipped with monochromatic Al Kα x-rays. Atomic sensitivity factors, supplied with the Fisons M-Probe spectrometer, were used to establish the relative atomic concentration of the elements detected by the spectrometer. The largest analysis spot size (∼1 mm²) was used. Charge neutralization was accomplished using the electron flood gun/screen (FGS) method. The binding energy scale of each spectrum was adjusted by referencing the C-C/C-H contribution of the C1s peak to 285.0 eV. The reported data is an average of three survey scans per sample.

The XPS angle resolved experiments were conducted using a Service Physics variable angle tilt stage. High resolution XPS spectra was obtained at take off angles, as measured between the lens axis and sample surface, of 15 and 90 degrees. A summary of the XPS survey spectra are shown in Table 2. A significant difference was not detected between the botchy and uniformly coated areas (samples 1 and 1 b) on the treated nitrile glove. Prior to chlorination, more oxygen was detected on the untreated nitrile glove and no chlorine was detected on either glove. After chlorination, the surface chlorine concentration increases for both gloves but significantly more for the latex glove. The latex and nitrile gloves were not chlorinated under identical conditions and these differences may be due to differences in their chlorination process. One other interesting observation is that the chlorinated nitrile glove appears to have significantly more oxygen at the surface than the latex glove, particularly if the presence of silicone is accounted for. Polydimethyl siloxane has a theoretical atomic ratio of 2 C: 1 O: 1 Si (50% C, 25% O, 25% Si). Assuming the silicon detected on the surface of the chlorinated gloves is from a silicone contaminant, the O and C atomic percentages for the chlorinated nitrile glove would be 19.8 and 64.9, respectively, for an O/C ratio of ca. 0.30. The O and C atomic percentages for the chlorinated latex glove would be 19.8 and 64.9, respectively, for an O/C ratio of ca. 0.13. This would suggest that the nitrile glove has two-three times the amount of surface oxygen as the latex glove. The methoxy groups on the silane are highly reactive to surface hydroxyls and other oxygen functionalities. Therefore, based on this data, one would expect the silane on the antimicrobial to be more reactive to the nitrile surface than the latex surface, which is contrary to the transfer study results.

**Table 2 - Summary of XPS Data**

| Sample | | | AMT 12435 -Atomic Percentages | | | | | | | | | |
|---|---|---|---|---|---|---|---|---|---|---|---|---|
| Glove Type | # | Discription | O 1s | N 1s | Ca 2p | C 1s | Cl 2p | Si 2p | Zn 3p | S 2p | P 2p | Mg a |
| Nitrile | | Nonchlorinated | 16.7 | 0.3 | 0.8 | 62.9 | | 15.9 | | 3.4 | | |
| | 6 | Std | 0.4 | 0.3 | 0.2 | 1.2 | | 0.8 | | 0.1 | | |
| | | | | | | | | | | | | |
| | 2 | Chlorinated | 20.4 | 1.2 | 6.7 | 66.1 | 1.3 | 0.6 | 0.24 | 2.8 | 0.6 | |
| | | Std | 0.9 | 0.4 | 0.6 | 1.1 | 0.1 | 0.2 | 0.03 | 0.3 | 0.1 | |
| | | | | | | | | | | | | |
| | 1 | w/AEM coating | 6.6 | 2.8 | 0.2 | 78.9 | 4.8 | 4.8 | 0.85 | 1.1 | | |
| | | Std | 0.1 | 0.3 | 0.1 | 0.4 | 0.1 | 0.1 | 0.07 | 0.4 | | |
| | | | | | | | | | | | | |
| | 1b | w/ AEM coating | 6.6 | 2.8 | 0.2 | 78.9 | 4.8 | 4.8 | 0.85 | 1.1 | | |
| | | Std | 0.1 | 0.3 | 0.1 | 0.4 | 0.1 | 0.1 | 0.07 | 0.4 | | |
| | | | | | | | | | | | | |
| Latex | 3 | Nonchlorinated | 11.5 | 0.9 | 2.0 | 75.5 | | 0.7 | 1.21 | 0.6 | | 6.8 |
| | | Std | 1.1 | 0.3 | 0.2 | 1.4 | | 0.1 | 0.11 | 0.3 | | 1.3 |
| | | | | | | | | | | | | |
| | 4 | Chlorinated | 12.2 | 1.6 | 1.7 | 71.8 | 6.7 | 3.7 | 1.82 | 0.7 | | |
| | | Std | 0.3 | 0.4 | 0.1 | 0.3 | 0.1 | 0.5 | 0.15 | 0.2 | | |
| | | | | | | | | | | | | |
| | 5 | w/ AEM coating | 6.6 | 1.0 | 1.6 | 85.0 | 3.0 | 2.1 | 0.67 | | | |
| | | Std | 0.5 | 0.5 | 0.1 | 1.5 | 0.5 | 0.3 | 0.03 | | | |
| | | | | | | | | | | | | |
| Control | | Film of AEM | 5.1 | 2.4 | | 86.9 | 3.0 | 2.5 | | | | |

The XPS results in Table 2 confirm that the antimicrobial is retained to the surface of both gloves. The atomic percentages from the treated latex and nitrile gloves for N, Si, O, and Cl are comparable to what was obtained from the control AEM 5700 sample, a thin film cast from the AEM 5700 solution onto a gold slide. However, subtle differences that are noted include higher N and Si concentration on the nitrile glove and more C on the latex glove.

To obtain a better understanding on the orientation of the antimicrobial on the surface of the treated gloves, angle resolved XPS was conducted on glove samples 1 and 3. These results are summarized in Table 3 and are an average of two measurements. The N⁺/N ratios obtained from the N 1 s spectra were used to determine the relative signal from the AEM 5700 coating. As shown in Table 3, higher N⁺/C were obtained from the nitrile sample compared to the latex sample. The N⁺/C ratios obtained from the nitrile sample were also significantly higher than those obtained from the control sample and the N⁺/C ratios from the latex sample were significantly lower. These differences indicate a possible difference in the orientation of the antimicrobial on the surface of the two gloves. For example, if the organic tail is extending out away from the surface one would expect to have obtained lower N⁺/C ratios, and just opposite if the organic tail was predominately orientated toward the surface of the glove.

As the stage is tilted to grazing angles (15 degrees) one would expect to detect more organic content if the antimicrobial was orientated on the surface of the glove with the aliphatic tail extending away from the surface with the silane bonding to the surface, as it is assumed to be on the latex glove. For both the treated gloves, the N⁺/C ratios do decrease from 90 to 15 degrees. A larger change in the N⁺/C ratios, however, was expected for the latex glove compared to the nitrile based on the anticipated orientation of the AEM on the surface of the sample. The inability to differentiate between the two samples by angle resolved XPS may be due to the surface roughness of the substrate and variability in the data.

**Table 3 - Angle Resolved XPS data**

| Sample | Angle | N+/C | Delta N+/C |
|---|---|---|---|
| 1 | 90 | 0.049 | 0.58 |
| | 15 | 0.031 | |
| | | | |
| 3 | 90 | 0.0161 | 0.58 |
| | 15 | 0.0102 | |

Further confirmation of a in difference orientation can be seen from surface energy measurements, as summarized in Table 4, below. When the gloves are chlorinated, the surface energies and surface polarities of each increase and become more similar in terms of their surface polarity. Once the antimicrobial is applied, the surface energy of the both gloves increases. The surface energy of the latex glove, however, has a significantly lower surface polarity and surface tension than the treated nitrile glove, consistent with a molecular orientation of the antimicrobial predominately orientated with the organic tail extending out away from the surface of the glove.

**Table 4 - Surface Energy Data for Glove Samples**

| Sample | Surface Tension | Polar Component | Dispersive Component | Surface Polarity |
|---|---|---|---|---|
| Discription | (mJ/m2) | (mJ/m2) | (mJ/m2) | % |
| #5 untreated Latex | 25.49 | 1.38 | 24.11 | 5.41 |
| #6 Untreated Nitrile | 35.92 | 7.86 | 28.06 | 21.88 |
| | | | | |
| #4 Chlorinated Latex | 53.46 | 15.81 | 37.65 | 29.57 |
| #2 Chlorinated Nitrile | 54.5 | 17.49 | 37.01 | 32.1 |
| | | | | |
| #3 Treated Latex | 25.88 | 4.07 | 21.81 | 15.71 |
| #1 Treated Nitrile | 41.86 | 11.44 | 30.42 | 27.34 |

The present invention has been described in general and in detail by way of examples. Persons of skill in the art understand that the invention is not limited necessarily to the embodiments specifically disclosed, but that modifications and variations may be made without departing from the scope of the invention as defined by the following claims or their equivalents, including other equivalent components presently known, or to be developed, which may be used within the scope of the present invention. Therefore, unless changes otherwise depart from the scope of the invention, the changes should be construed as being included herein.

**EMPIRICAL TABLE 1**

| **Sample #** | **Organism Count (CFU/ml)** | | | | **% Reduction** | | | | |
|---|---|---|---|---|---|---|---|---|---|
| | **Zero Time Point** | **30 min. Time Point** | **1 Hr. Time Point** | **3 Hr. Time Point** | **0 hr.** | **30 min.** | **1 Hr.** | **3 Hr.** | |
| #1 - 1/2 KC SafeSkin PFE Latex Glove; 8855-88-5 0.40% PVA; 2% AEM 5700 | 1.4 X10⁵ | 3.4 X 10⁴ | 1.2 X 10³ | 10 | NR | 71.7% | 99.0% | 99.99% | |
| | | | | | | | | | |
| #2 -1/2 KC SafeSkin PFE Latex Glove; 8855-88-4 0.25% PVA; 2% AEM 5700 | 1.7 X 10⁵ | 8.8 X 10⁴ | 6.7 X 10³ | 40 | NR | 26.7% | 94.4% | 99.97% | |
| | | | | | | | | | |
| #3 - 1/2 KC SafeSkin PFE Latex Glove; 8855-70-2 0 days aged; extra rinses prior to AEM 5700 | 1.3X10⁵ | 1.3X10⁵ | 1.2 X10⁵ | 6.8 X10⁴ | NR | NR | NR | 43.3% | |
| | | | | | | | | | |
| Control -1/2 KC SafeSkin PFE Latex Glove & C. albicans (6/17/03) | 1.2X10⁵ | 1.3X10⁵ | 1.3 X10⁵ | 8.6X10⁴ | | NR | NR | 28.3% | |
| | | | | | | | | | |
| Comments: NR=no reduction | | | | | | | | | |
| ND = non detectable (<10 CFU/ml) | | | | | | | | | |
| | | | | | | | | | |

**EMPIRICAL TABLE 2**

| **Sample #** | **Organism Count (CFU/ml)** | | | | **% Reduction** | | | | |
|---|---|---|---|---|---|---|---|---|---|
| | **Zero Time Point** | **3 min. Time Point** | **5 min. Time Point** | **30 min. Time Point** | **0 hr.** | **3 min.** | **5 min.** | **30 min.** | |
| #1-1/2KC SafeSkin PFE Latex Glove; 8855-88-6 1.0% PVA & 2% AEM 5700 | 3.4X10⁴ | 1.7X10² | 40 | ND | 73.8% | 99.87% | 99.97% | 99.99% | |
| | | | | | | | | | |
| #2 - 1/2 KC SafeSkin PFE Latex Glove; 8855-71-1 No rinse after AEM 5700 | 3.8X10⁴ | 5.1X10³ | 8.4X10² | 40 | 70.8% | 96.1% | 99.3% | 99.97% | |
| | | | | | | | | | |
| #3-1/2 KC SafeSkin PFE Latex Glove; 8855-70-2 0 day; extra rinses prior to AEM 5700 | 1.1X10⁵ | 4.1X10⁴ | 1.1X10⁴ | 4.5X10³ | 15% | 68.50% | 91.5% | 96.5% | |
| | | | | | | | | | |
| Control -1/2 KC SafeSkin PFE Latex Glove & S. aureus (6/24/03) | 1.3X10⁵ | 1.1X10⁵ | 1.2X10⁵ | 1.3X10⁵ | | 15.4% | 7.7% | NR | |
| | | | | | | | | | |
| Comments: NR = no reduction | | | | | | | | | |
| ND = non detectable (<10 CFU/ml) | | | | | | | | | |
| | | | | | | | | | |

**EMPIRICAL TABLE 3**

| **Sample #** | **Organism Count (CFU/ml)** | | | | **% Reduction** | | | | |
|---|---|---|---|---|---|---|---|---|---|
| | **Zero Time Point** | **30min. Time Point** | **1Hr. Time Point** | **3Hr. Time Point** | **0 hr.** | **30 min.** | **1Hr.** | **3Hr.** | |
| #1- 1/2 KC SafeSkin PFE Latex Glove; 8855-88-1 0.3 % PVA & 2% AEM 5700 | 1.4X10⁵ | 1.1X10⁴ | 3.8X10³ | 2.2X10² | 6.7% | 92.7% | 97.5% | 99.8% | |
| | | | | | | | | | |
| #2 - 1/2 KC SafeSkin PFE Latex Glove; 8855-88-2 0.50% PVA & 2% AEM 5700 | 1.6X10⁵ | 4.5X10⁴ | 2.6X10⁴ | 2.1X10³ | NR | 70% | 82.7% | 98.6% | |
| | | | | | | | | | |
| #3 -1/2 KC SafeSkin PFE Latex Glove; 8855-88-3 0.15% PVA & 2% AEM 5700 | 1.8X10⁵ | 7.5X10⁴ | 6.7X10⁴ | 9.9X10³ | NR | 50% | 55.3% | 93.4% | |
| | | | | | | | | | |
| Control - 1/2 KC SafeSkin PFE Latex Glove & E. coli (7/15/03) | 1.5X10⁵ | 1.5X10⁵ | 1.3X10⁵ | 1.1X10⁵ | | NR | 13.3% | 26.7% | |
| | | | | | | | | | |
| Comments: NR = no reduction | | | | | | | | | |
| ND = non detectable (<10 CFU/ml) | | | | | | | | | |
| | | | | | | | | | |

## Claims

1. A method for immobilizing anti-microbial compounds onto an elastomeric surface, the method comprising: a) providing substrate having a surface with either polar or non-polar functionality; b) providing at least a layer of molecules, said molecules having at least bi-functional polar character selected from hydroxyl, amine, amides, imine, imide, carbonyl, carboxyl, ester, aldehyde, or ether groups, in which at least one portion of said molecules has a reactive oxygen or nitrogen group exposed, and applying to said layer an anti-microbial agent having a functional group reactive with said exposed oxygen group.

2. The method according to claim 1, wherein the substrate is either a natural or synthetic latex, or vinyl material.

3. The method according to claim 1 or claim 2, wherein said layer of molecules is adapted to be a covalent linker agent for immobilizing said anti-microbial agent to said elastomeric surface.

4. The method according to any preceding claim, wherein said layer of molecules either a) forms part of an intermediate tying coating between said substrate and said anti-microbial agent, or b) is integrated into said substrate surface.

5. The method according to any preceding claim, wherein said anti-microbial compound is non-leaching, remaining substantially bonded to said substrate.

6. The method according to any preceding claim, wherein said anti-microbial compound has a R-group with a hydrocarbon chain of at least 6 carbon units as an active anti-microbial moiety.

7. The method according to any preceding claim, wherein said anti-microbial compound includes a quaternary ammonium compound, biguanide, or an alkylsulfosuccinate compound.

8. The method according to claim 6, wherein said layer of molecules orients said active anti-microbial moiety of said anti-microbial compound substantially away from said substrate surface.

9. The method according to claim 8, wherein said layer of molecules includes at least one of the following: polyvinyl alcohol, carboxyl-methyl cellulose, hydroxy-propyl cellulose, poly(diallyl-dimethyl-ammonium chloride) (PDADMAC), or epihalohydrin-amine polymers.

10. An elastomeric article having a surface with an anti-microbial coating, said article comprises: a substrate with polar functionalities, upon which is at least a coating of molecules; said molecules having at least bi-functional polar character selected from hydroxyl, amine, amides, imine, imide, carbonyl, carboxyl, ester, aldehyde, or ether groups, in which at least one portion of said molecules has a reactive oxygen group exposed; and, an anti-microbial compound having a functional group reactive with said oxygen group in said coating.

11. The elastomeric article according to claim 10, wherein said article has at an outer surface of said substrate a greater concentration of molecules having at least bi-functional polar characteristics than within said substrate.

12. The elastomeric article according to claim 10, wherein said article has a differentiated concentration gradient of molecules having at least bi-functional polar characteristics from inside to outside of said substrate, or from an inner surface to an outer surface.

13. The elastomeric article according to claim 10, wherein the substrate forms part of an article formed according to a dip-forming process.

14. The elastomeric article according to any of claims 10-13, wherein said substrate forms part of a protective or medical device.

15. The elastomeric article according to any of claims 10-13, wherein said substrate forms part of a glove, condom, catheter, or balloon.

## Patentansprüche

1. Verfahren zum Immobilisieren von antimikrobiellen Verbindungen auf einer elastomeren Oberfläche, wobei das Verfahren umfasst: a) das Bereitstellen eines Substrats, das eine Oberfläche mit entweder polarer oder nichtpolarer Funktionalität aufweist; b) das Bereitstellen von wenigstens einer Schicht von Molekülen, wobei die Moleküle wenigstens bifunktionellen polaren Charakter aufweisen, ausgewählt aus Hydroxyl, Amin, Amiden, Imin, Imid, Carbonyl, Carboxyl, Ester, Aldehyd oder Ethergruppen, wobei wenigstens ein Teil der Moleküle eine exponierte reaktionsfähige Sauerstoff- oder Stickstoffgruppe aufweist, und das Aufbringen eines antimikrobiellen Wirkstoffs auf die Schicht, der eine funktionelle Gruppe aufweist, die mit der exponierten Sauerstoffgruppe reaktionsfähig ist.

2. Verfahren nach Anspruch 1, wobei das Substrat entweder ein natürlicher oder synthetischer Latex oder ein Vinylmaterial ist.

3. Verfahren nach Anspruch 1 oder Anspruch 2, wobei die Schicht von Molekülen so eingerichtet ist, dass sie ein kovalentes Verknüpfungsagens zum Immobilisieren des antimikrobiellen Wirkstoffs auf der elastomeren Oberfläche ist.

4. Verfahren nach einem der vorangehenden Ansprüche, wobei die Schicht von Molekülen entweder a) einen Teil einer intermediären Kopplungsbeschichtung zwischen dem Substrat und dem antimikrobiellen Wirkstoff bildet oder b) in die Substratoberfläche integriert ist.

5. Verfahren nach einem der vorangehenden Ansprüche, wobei die antimikrobielle Verbindung nicht ablösbar (non-leaching) ist und im Wesentlichen an das Substrat gebunden bleibt.

6. Verfahren nach einem der vorangehenden Ansprüche, wobei die antimikrobielle Verbindung eine R-Gruppe mit einer Kohlenwasserstoffkette von wenigstens 6 Kohlenstoffeinheiten als eine aktive antimikrobielle Einheit aufweist.

7. Verfahren nach einem der vorangehenden Ansprüche, wobei die antimikrobielle Verbindung eine quartäre Ammoniumverbindung, Biguanid oder eine Alkylsulfosuccinatverbindung einschließt.

8. Verfahren nach Anspruch 6, wobei die Schicht von Molekülen die aktive antimikrobielle Einheit der antimikrobiellen Verbindung im Wesentlichen von der Substratoberfläche weg ausrichtet.

9. Verfahren nach Anspruch 8, wobei die Schicht von Molekülen wenigstens eines der folgenden einschließt: Polyvinylalkohol, Carboxyl-methylcellulose, Hydroxy-propylcellulose, Poly(diallyl-dimethyl-ammoniumchlorid) (PDADMAC) oder Epihalohydrinaminpolymere.

10. Elastomerer Artikel mit einer Oberfläche mit einer antimikrobiellen Beschichtung, wobei der Artikel umfasst: ein Substrat mit polaren Funktionalitäten, auf welchem sich wenigstens eine Beschichtung aus Molekülen befindet; wobei die Moleküle wenigstens bifunktionellen polaren Charakter aufweisen, ausgewählt aus Hydroxyl, Amin, Amiden, Imin, Imid, Carbonyl, Carboxyl, Ester, Aldehyd oder Ethergruppen, wobei wenigstens ein Teil der Moleküle eine exponierte reaktionsfähige Sauerstoffgruppe aufweist; und eine antimikrobielle Verbindung mit einer funktionellen Gruppe, die mit der Sauerstoffgruppe in der Beschichtung reaktionsfähig ist.

11. Elastomerer Artikel nach Anspruch 10, wobei der Artikel an einer äußeren Oberfläche des Substrats eine größere Konzentration von Molekülen mit wenigstens bifunktionellen polaren Eigenschaften aufweist, als innerhalb des Substrats.

12. Elastomerer Artikel nach Anspruch 10, wobei der Artikel einen differenzierten Konzentrationsgradienten von Molekülen mit wenigstens bifunktionellen polaren Eigenschaften vom Inneren zum Äußeren des Substrats oder von einer inneren Oberfläche zu einer äußeren Oberfläche aufweist.

13. Elastomerer Artikel nach Anspruch 10, wobei das Substrat einen Teil eines Artikels bildet, der durch ein Tauchformverfahren gebildet wird.

14. Elastomerer Artikel nach einem der Ansprüche 10 bis 13, wobei das Substrat einen Teil einer schützenden oder medizinischen Vorrichtung bildet.

15. Elastomerer Artikel nach einem der Ansprüche 10 bis 13, wobei das Substrat einen Teil eines Handschuhs, Kondoms, Katheters oder Ballons bildet.

## Revendications

1. Procédé d'immobilisation de composés anti-microbiens sur une surface élastomère, le procédé comprenant a) la fourniture d'un substrat ayant une surface ayant une fonctionnalité polaire ou non-polaire ; b) la fourniture d'au moins une couche de molécules, lesdites molécules ayant un caractère polaire au moins bifonctionnel sélectionnées dans le groupe consistant en les groupes hydroxyle, amine, amide, imine, imide, carbonyle, carboxyle, ester, aldéhyde et éther, où au moins une partie desdites molécules a un groupe azoté ou oxygéné réactif exposé, et l'application à ladite couche d'un agent anti-microbien ayant un groupe fonctionnel réactif avec ledit groupe oxygéné exposé.

2. Procédé selon la revendication 1, dans lequel le substrat est un latex naturel ou synthétique, ou un matériau vinyle.

3. Procédé selon la revendication 1 ou selon la revendication 2, dans lequel ladite couche de molécules est adaptée à constituer un agent de liaison covalent pour immobiliser ledit agent anti-microbien sur/dans ladite surface élastomère.

4. Procédé selon l'une quelconque des revendications précédentes, dans lequel ladite couche de molécules soit a) fait partie d'un revêtement d'accroche intermédiaire entre ledit substrat et ledit agent anti-microbien, soit b) est intégré dans ladite surface de substrat.

5. Procédé selon l'une quelconque des revendications précédentes, dans lequel ledit composé anti-microbien n'est pas lessivable, restant ainsi sensiblement lié audit substrat.

6. Procédé selon l'une quelconque des revendications précédentes, dans lequel ledit composé anti-microbien a un groupe R possédant une chaîne hydrocarbonée ayant au moins 6 unités carbone, en tant que motif fonctionnel anti-microbien actif.

7. Procédé selon l'une quelconque des revendications précédentes, dans lequel ledit composé anti-microbien inclut un composé ammonium quaternaire, un biguanide ou un composé sulfosuccinate d'alkyle.

8. Procédé selon la revendication 6, dans lequel ladite couche de molécules oriente ledit motif fonctionnel anti-microbien actif dudit composé anti-microbien sensiblement à l'écart de ladite surface du substrat.

9. Procédé selon la revendication 8, dans lequel ladite couche de molécules inclut l'un au moins des composés suivants : le poly(alcool vinylique), la carboxyl-méthylcellulose, l'hydroxypropyl cellulose, le poly(chlorure de diallyl-diméthyl-ammonium) (PDADMAC) et les polymères épihalogénohydrine-amine.

10. Article élastomère ayant une surface pourvue d'un revêtement anti-microbien, ledit article comprenant : un substrat ayant des fonctionnalités polaires et sur lequel se trouve au moins un revêtement de molécules ; lesdites molécules ayant un caractère polaire au moins bifonctionnel sélectionnées dans le groupe consistant en les groupes hydroxyle, amine, amide, imine, imide, carbonyle, carboxyle, ester, aldéhyde et éther, où au moins une partie desdites molécules a un groupe oxygéné réactif exposé ; et un composé anti-microbien ayant un groupe fonctionnel réactif avec ledit groupe oxygéné se trouvant dans ledit revêtement.

11. Article élastomère selon la revendication 10, ledit article ayant, au niveau d'une surface extérieure dudit substrat, une plus grande concentration en molécules ayant des caractéristiques polaires au moins bifonctionnelles qu'au sein du substrat.

12. Article élastomère selon la revendication 10, ledit article ayant un gradient de concentrations différenciées de molécules ayant des caractéristiques polaires au moins bifonctionnelles de l'intérieur à l'extérieur dudit substrat, ou d'une surface intérieure à une surface extérieure.

13. Article élastomère selon la revendication 10, dans lequel le substrat fait partie d'un article formé par un procédé de formation au trempé.

14. Article élastomère selon l'une quelconque des revendications 10-13, dans lequel ledit substrat fait partie d'un dispositif protecteur ou médical.

15. Article élastomère selon l'une quelconque des revendications 10-13, dans lequel ledit substrat fait partie d'un gant, d'un préservatif, d'un cathéter ou d'un ballonnet.
